# EUROPEAN PATENT APPLICATION

(11) **EP 4 575 831 A1**
(43) Date of publication of application: **25.06.2025**
(21) Application number: 24221831.1
(22) Date of filing: 19.12.2024
(51) Int. Cl.: G06F 16/532

(54) **ITEM RECOMMENDATION AND SEARCH USING GENERATIVE ARTIFICIAL INTELLIGENCE (AI) TAXONOMY-BASED IMAGE GENERATION**

(30) Priority: 20.12.2023 US 202318390865
(71) Applicant: eBay Inc., San Jose, CA 95125 (US)
(72) Inventor: ROMERO, Raul Enrique, SAN JOSE (US); MEKEL, Nitzan, SAN JOSE (US); ZAMANSKY, Noah Andrew, SAN JOSE (US); CARAMBULA, Aaron David, SAN JOSE (US); ING, Eric, SAN JOSE (US); GORDON, Kevin Michael, SAN JOSE (US); MANCO, Maxim, SAN JOSE (US); SRINIVASAN, Vaishnavi, SAN JOSE (US); ALTIG, Melissa Alejandra, SAN JOSE (US)
(74) Representative: Müller-Boré & Partner Patentanwälte PartG mbB

(57) **Abstract**

Taxonomy-based image generation is used for item searching, and enhances the quality and personalization of search results. Prior interacted items are classified into a categorical taxonomy. A generative AI model can be used to classify the prior interacted items, by generating categories or assigning to existing categories. A set of prior interacted items is selected from one of the categories and provided to an image model that generates a photo-realistic image in response. The photo-realistic image includes item renderings that are rendered illustrations of items. An item search using a search engine can be performed based on the generated photo-realistic image. For instance, the photo-realistic image or a portion thereof could be provided as a search query using an image-based search or described to perform a text-based search. Search results are identified for the search query and are provided in response.

## Description

### BACKGROUND

Network search engines are software systems designed to search for information in a network. Search engines use algorithms to determine the relevance and ranking of items in response to search queries. The primary function of these engines is to identify and retrieve items, which can include web pages, images, videos, goods and services for sale, and other types of digital content, as search results based on the keywords, phrases, or images provided by the search query. Over time, the technology behind search engines has evolved, incorporating advanced features such as natural language processing, machine learning, and personalized search capabilities, to enhance the accuracy and relevance of the search results provided to users.

### SUMMARY

At a high level, the technology relates to taxonomy-based image generation for item searching. Combining taxonomy-based image generation with image-based searching enhances the quality and personalization of search results that can be identified and returned responsive to a search query.

An example approach classifies prior interacted items into categories of a categorical taxonomy. The prior interacted items may be items that have received some interaction by a user. A generative AI (artificial intelligence) model can be used to classify the prior interacted items.

Having classified the prior interacted items, a set of prior interacted items can be selected from one of the categories. The set of prior interacted items from the category is provided to an image model that generates a photo-realistic image in response. The photo-realistic image includes item renderings that are illustrations of items. For example, if the image model generates a woman in a dress holding a handbag, the dress and the handbag could be considered renderings of items with the photo-realistic image. In an aspect, the photo-realistic image may be provided as a recommendation for items similar to the item renderings.

In an aspect, an item search using a search engine can be performed based on the generated photo-realistic image. For instance, the photo-realistic image or a portion thereof could be provided as a search query using an image-based search. Search results are identified for the search query and are provided in response, thus enhancing the way in which databased items can be explored through item searches.

Moreover, by using the taxonomy-based approach, images generated by the image model may be of an enhanced searchable quality compared to other methods, since the inputs for generating the image are classified into the same category.

This summary is intended to introduce a selection of concepts in a simplified form that is further described in the detailed description section of this disclosure. The summary is not intended to identify key or essential features of the claimed subject matter, nor is it intended to be an aid in determining the scope of the claimed subject matter. Additional objects, advantages, and novel features of the technology will be set forth in part in the description that follows, and in part will become apparent to those skilled in the art upon examination of the disclosure or learned through practice of the technology.

### BRIEF DESCRIPTION OF THE DRAWINGS

The present technology is described in detail below with reference to the attached drawing figures, wherein:
FIG. 1 illustrates an example operating environment in which aspects of the technology may be employed, in accordance with an aspect described herein;
FIG. 2 illustrates an example classification of prior interacted items, in accordance with an aspect described herein;
FIG. 3 illustrates an example ranking of categories for a categorical taxonomy, in accordance with an aspect described herein;
FIG. 4 illustrates selection of sets of prior interacted items, in accordance with an aspect described herein;
FIG. 5 illustrates an example generation of a photo-realistic image, in accordance with an aspect described herein;
FIG. 6 illustrates an example segmentation of the photo-realistic image of FIG. 5, in accordance with an aspect described herein;
FIG. 7 illustrates example search queries based on the photo-realistic image of FIG. 5, in accordance with an aspect described herein;
FIG. 8 illustrates an example item search using a search query, in accordance with an aspect described herein;
FIG. 9 illustrates a flow diagram of an example item search method, in accordance with an aspect described herein; and
FIG. 10 illustrates an example computing device suitable for implementing aspects of the technology, in accordance with an aspect described herein;

### DETAILED DESCRIPTION

Text-based internet searching refers to the process of using a search engine to find information over a network, such as the internet, by entering text queries. In this method, users input a series of words or phrases into a search engine, and the search engine returns a list of items, that could include web pages, documents, images, goods or services for sale, videos, music, or other types of digital files, that are considered relevant to the query.

Conventionally, the search engine processes the text-based query to understand its intent. This may involve parsing the query, correcting misspellings, and sometimes expanding the query using synonyms or related terms, a process known as query expansion. Many search engines maintain an extensive index of web pages and other online content. The processed query is used to search this index for matching results.

In many cases, search engines use ranking algorithms to sort the results based on various factors such as relevance, page quality, and the number of inbound links, among others. The sorted list of results is displayed to the user, usually with a title, a brief snippet of content, and the URL (uniform resource locator) of a landing page related to the item. The user can then click on the item or links to visit the webpages and access the information for which they were searching.

Text-based internet searching has evolved significantly since its inception. Early search engines primarily used keyword matching and were not very sophisticated in understanding the context or semantics of a query. Modern search engines use complex algorithms that incorporate machine learning, natural language processing, and other advanced techniques to provide more accurate and contextually relevant results.

Image-based searching, sometimes referred to as "reverse image searching," is a type of search where an image is used as the search query. In this method, users upload an image to a search engine, which then analyzes the image and returns a list of items that may include similar images or related information. The search engine may use various techniques like feature extraction, color histograms, and machine learning algorithms to identify patterns, shapes, and other characteristics within the image to further optimize the search results.

For instance, some conventional search engines process the image to extract key features such as color distribution, texture, and shapes. The extracted features are used to search a database of indexed images for matches. Similar to text-based searches, the search engine ranks the results based on similarity metrics, and the ranked results are provided back to a user computing device.

Image-based searching is particularly useful when the user cannot adequately describe what they are looking for in text. For example, identifying a landmark or a piece of art is often easier with an image than with a textual description. Image-based searching can be beneficial for users who are looking for products but do not know the exact name or brand. They can simply upload a picture of the item to find similar products.

Further, image-based searching provides a rich contextual framework for queries. A single image can encapsulate a multitude of elements-such as colors, textures, lighting, and more-that would otherwise require extensive textual description to be input by a user. This visual complexity allows for more precise and nuanced search results.

Additionally, images can resolve the ambiguity often present in user-provided text queries. For example, an image of an apple instantly clarifies whether the user is referring to the fruit or the tech company. The multifaceted information contained in an image, which can include multiple objects or concepts related in a specific way, offers a comprehensive understanding of the user's intent. Moreover, images capture non-verbal elements like emotion, style, and atmosphere that are difficult to convey through text, or would at the least require a user to enter extensive and verbose textual queries to try to capture such elements. Lastly, the universal nature of images transcends language barriers, making them particularly useful in a global context where text-based keywords might not translate effectively.

One limitation of image-based searching is the need for a relevant image to use as the query. This becomes problematic in various scenarios, such as when you encounter a product you like in a physical store but cannot take a picture for an online search. Similarly, if you remember an image or scene but do not have a copy, text-based maybe the only option. Furthermore, technical constraints can hinder the utility of image-based searches; for instance, limited device capabilities or poor internet connectivity may prevent users from uploading images, thereby restricting them to text-based queries.

Search techniques, including image-based searching, are integral to the technical function of the internet, primarily because of the sheer volume and diversity of content available online. The internet hosts billions of webpages, images, videos, and other forms of data. Without sophisticated search and ranking algorithms, it would be virtually impossible for users to find relevant information in this vast sea of content. As an example, around the time of filing this application, a search query for "City of Fountains" returned more than 92.6 million results. This evidences how critical search and ranking techniques are to internet functioning, as it would not be possible for a user to sift through each of these results, necessarily relying on the search engine and its ability to identify and rank search results, instead.

As the internet continues to grow, the complexity and variety of queries also increase. Simple text-based search queries may not suffice for all types of item searches, especially those that are visual or contextually complex. This is where specialized search techniques like image-based searching come into play, offering alternative ways to navigate the digital landscape, and allowing search engines to provide the user with useful results among the trillions of possibilities.

In essence, search techniques are not just a useful feature, but instead, are a necessity for the internet to function as a useful resource. They act as the organizing principle that makes the internet accessible and navigable, turning an overwhelming amount of data into a structured and user-accessible environment. Improvements to searching techniques necessarily improve internet functioning.

Techniques provided by the technology disclosed herein improve network searching techniques by using a taxonomy approach to image generation for images that can then be used as the basis for a search query.

One example method that can capture some of these benefits uses categorized prior interacted items to generate photo-realistic images that can be used as the basis for a search query. Prior interacted items include items with which a user has interacted. For instance, a user may interact with an item by clicking on the item, hovering an input indicator over the item for a particular duration, watching a video or a portion of a video for a particular length of time, providing a sentiment indication, such as a like or dislike of the item, or another method that indicates a user's attention on a particular item.

The items subject to these interactions can be classified into a categorical taxonomy, which includes an organizational classification system for grouping items according to some shared attribute. An example includes a categorical taxonomy based on clothing style. For instance, various pieces of clothing could be categorized based on the style represented by the clothing.

Having categorized the prior interacted items, some or all of the prior interacted items can be selected from a particular category. That is, a set of prior interacted items includes a selection of one or more of the interacted items for one of the categories.

The selected prior interacted items in the set of prior interacted items can be provided to an image model. For instance, a title, an image, text, or other portion of each prior interacted item can be provided to the image model, which generates an image in response. Since the set of prior interacted items provided to the model are all included in the one category, the image represents that particular category and often will capture the common attributes for the category. A diffusion model may be used to generate the image, resulting in a photo-realistic image that includes an item rendering. Item renderings include images that are rendered to have features that could correspond to actual items identifiable by the search engine. The photo-realistic image may be provided for display at a user computing device as a recommendation for actual items similar to the rendered items. In some cases, the photo-realistic image is used as the basis for an item search to identify items similar to the item renderings. In aspects, the photo-realistic image is segmented to identify and isolate item renderings. Item renderings can then be selected by a user to perform searches for items visually similar to the isolated item renderings.

To perform the search, a search query is determined from a photo-realistic image. The search query may include the photo-realistic image or a portion thereof. In an aspect, the search query includes one or more isolated item renderings. A search engine may use any of these image-based search queries to perform an image-based search. In another aspect, a textual description of the photo-realistic image or an item rendering within it is generated and used for the search.

Advantageously, this technique and others that will be further described help solve many problems inherent in conventional text- and image-based search methods. For instance, by generating an image using a category, a more robust image may be generated that is more likely to capture the attributes of that category. In this way, various attributes common to different categories can be expressed in various photo-realistic images generated by the image model and used for searching. Thus, there is a better chance that the photo-realistic image used as the basis of the search query will capture the attribute that the user intents to find in an actual item returned as a search result. In turn, this results in more accurate identification and return of search results by the search engine. Moreover, the generated photo-realistic images may include augmented recommendations, which may be a blend of items listed within different groups by a platform. This may come about because the photo-realistic images are generated from the categories determined from the generative AI methods that may place prior interacted items from different groupings into a same category. In this way, searches using the generated photo-realistic images may identify actual items with similar categorical features across various item groupings defined by the platform at which the items are included.

Techniques presented herein also aid in providing visual recommendations, which otherwise might not be apparent using non-taxonomy approaches to image generation. That is, aspects, of the technology generate a taxonomy-based photo-realistic image that can be provided for display at a computing device to recommend or otherwise identify items similar to the item renderings. The generated photo-realistic image may be provided as a recommendation in addition to or in lieu of using it as the basis for an item search.

Additionally, the categorical approach to image generation for search engine searching helps explore areas of the database that might not otherwise be explored. That is, considering some databases contain billions of potential returns, the methods can help identify and return items that would otherwise be missed using conventional searches. For instance, by generating a photo-realistic image using an AI model, the model seeks to predict objects in the image that naturally fit the prompt it is provided. In this case, the model may generate items that naturally fit the category in which the classified prior interacted items are included. Thus, it may predict items related to the inputs that would otherwise be missed using classical query expansion techniques, thereby returning search result related to the predicted items that would be missed using conventional user-entered text based search queries. Even in cases, where the search query determined from the photo-realistic image is a textual description of the image or item rendering, the textual description that can be generated by describing rendered images is more robust and describes predicted items, which would otherwise not be input or predicted by a user entering a standard search query.

Further, techniques provided herein can help improve some aspects of the computing device, itself. For instance, the search queries generated from the photo-realistic images are typically far more comprehensive and robust in nature, describing that which the user intends to search in far greater detail than would otherwise be provided in a traditional search query input. This allows deeper and more focused exploration of a search index when retrieving items. In essence, more accurate search results can be identified and returned, thereby lowering the number of search results that are transmitted across the network responsive to the query. Further, overall system latency may be reduced, as the reduction in the response time experienced from fewer transmitted search results allows for faster processing of a query queue. Further, as noted, there are instances where computing devices have low network connectivity, reducing the likelihood that a user might be able to upload an image for searching. However, in aspects of the present technology, a search image may be generated from simple prior interactions of items. This could allow for backend image generation that produces an image suitable for item searching without the user having to upload an image from their own device.

Moreover, many of the techniques that are described are not well-understood, routine, or conventional in relevant technological fields. For instance, it's believed that generating photo-realistic images using a categorical approach to image generation, where prior interacted items are classified and used to generate images corresponding to a category, and which can be used as the basis of the search query, is not a process readily employed by conventional search engines.

It will be realized that the method previously described is only an example that can be practiced from the description that follows, and it is provided to more easily understand the technology and recognize its benefits. Additional examples are now described with reference to the figures.

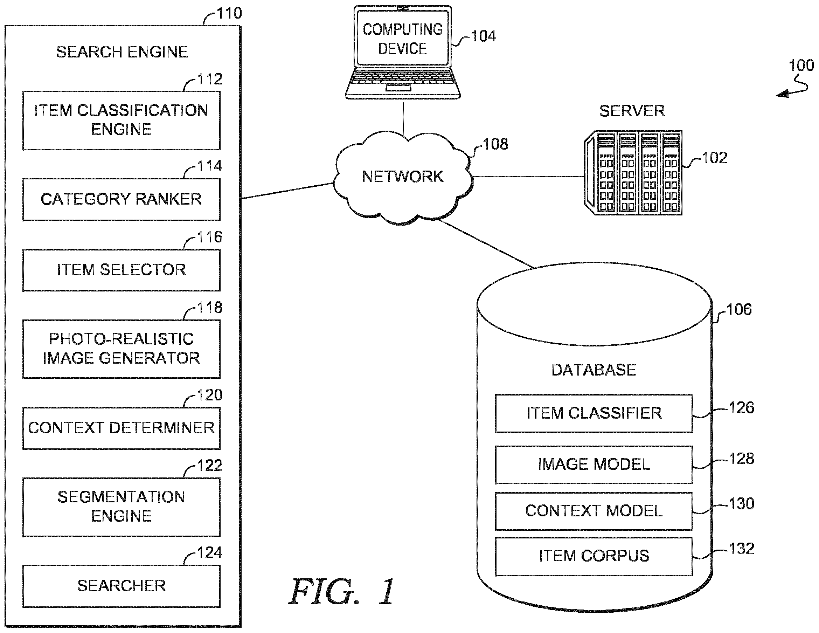

With reference now to FIG. 1, an example operating environment 100 in which aspects of the technology may be employed is provided. Among other components or engines not shown, operating environment 100 comprises server 102, computing device 104, and database 106, which are communicating via network 108 to search engine 110.

Database 106 generally stores information, including data, computer instructions (e.g., software program instructions, routines, or services), or models used in embodiments of the described technologies. For instance, database 106 may store computer instructions for implementing functional aspects of search engine 110. Although depicted as a single database component, database 106 may be embodied as one or more databases or may be in the cloud.

Network 108 may include one or more networks (e.g., public network or virtual private network [VPN]), as shown with network 108. Network 108 may include, without limitation, one or more local area networks (LANs), wide area networks (WANs), or any other communication network or method.

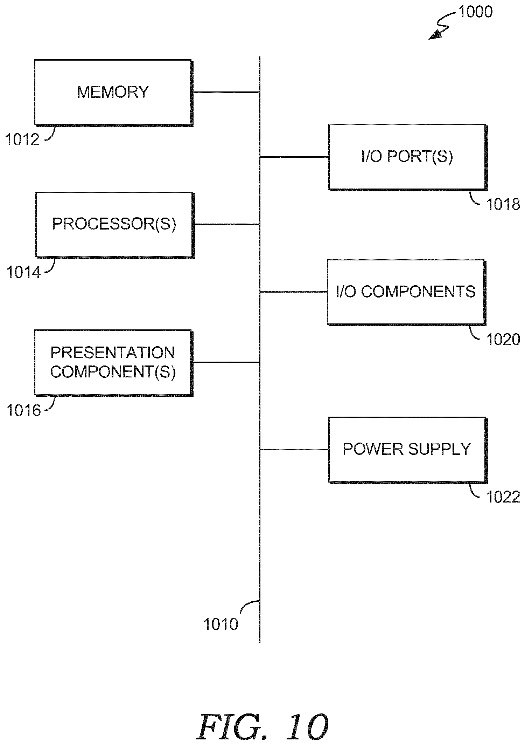

Generally, server 102 is a computing device that implements functional aspects of operating environment 100, such as one or more functions of search engine 110 to facilitate item searches from photo-realistic images generated according to a categorical taxonomy. One suitable example of a computing device that can be employed as server 102 is described as computing device 1000 with respect to FIG. 10. In implementations, server 102 represents a back-end or server-side device.

Computing device 104 is generally a computing device that may be used to initiate an item search. For instance, a user may employ functional aspects of search engine 110 initiated at computing device 104 to receive and display search results for the item search. For instance, computing device 104 may receive inputs from an input component corresponding to interactions with items. That is, inputs at the computing device may indicate an interaction with an item, thus identifying which items are stored or otherwise indicated as prior interacted items corresponding to the user, e.g, a user account, the computing device or address being used by the user, etc.

An interaction with an item comprises measurable engagement with the item. For instance, this may include varying levels of direct selection to passive engagement actions, such as clicking to access an item's details, hovering over an item for a threshold duration, watching a video or listening to music for a specified period, opening a document, or other like engagement with an item based on the type of item. In an aspect, prior interacted items are items having received an interaction during a defined threshold amount of time, such as the last 90 days, 180 days, or so forth. Prior interacted items may include those having received an interaction during an indefinite timeframe or any defined threshold.

As with other components of FIG. 1, computing device 104 is intended to represent one or more computing devices. One suitable example of a computing device that can be employed as computing device 104 is described as computing device 1000 with respect to FIG. 10. In implementations, computing device 104 is a client-side or front-end device.

In addition to server 102, computing device 104 may implement functional aspects of operating environment 100, such as one or more functions of search engine 110. It will be understood that some implementations of the technology will comprise either a client-side or front-end computing device, a back-end or server-side computing device, or both executing any combination of functions from search engine 110, among other functions or combinations of functions, including those not illustrated.

Search engine 110 generally executes an item search using a search query determined from a photo-realistic image generated based on a categorical taxonomy and provides search results of items in response. The search results may be included within a search engine results page (SERP). Items may include any of webpages, images, videos, infographics, articles, research papers, documents, goods and services for sale, and other types of files, and could include associated descriptions or hyperlinks thereto. Search engine 110 may be configured for general internet or network searching, or may be configured to search a specific database or website, such as a search engine that returns item listings on an ecommerce platform, as one example. Search results returned in response to a search query may include one or more items.

Broadly, search engine 110, either individually or in coordination with other components or systems, employs functions to execute an item search and provides an SERP of items in response. In doing so, search engine 110 determines a search query from a photo-realistic image generated from a set of prior interacted items for a category of the categorical taxonomy. As an example, search engine 110 may classify prior interacted items into categories of a categorical taxonomy. A set of one or more prior interacted items can be selected from one of the categories. The set of prior interacted items is provided to an image model that generates a photo-realistic image. The photo-realistic image includes item renderings, which are objects in the image that may correspond to visually similar items identifiable over a network. A search query can be determined from the photo-realistic image, and the search query executed to identify and return search results.

To do so, the example search engine 110 illustrated employs item classification engine 112, category ranker 114, item selector 116, photo-realistic image generator 118, context determiner 120, segmentation engine 122, and searcher 124. It is again noted, that search engine 110 is intended to be one example suitable for implementing the technology. However, other arrangements and architectures of components and function for generating photo-realistic images used to determine a search query for execution are intended to be within the scope of this disclosure and understood by those practicing the technology.

In general, item classification engine 112 may be used to classify prior interacted items. The prior interacted items may be classified according to a categorical taxonomy. In aspects, the categorical taxonomy is a predetermined classification system that may define the categories and describe attributes common to each category by which the prior interacted items are classified. In another aspect, the categorical taxonomy is determined based on descriptions of items, including prior interacted items or other items. For instance, a model, such as a generative model may be used to identify attributes common among items and categorize the items based on the determined commonalities, thereby generating the categorical taxonomy from the items themselves.

In the example illustrated, item classification engine 112 employs item classifier 126 to classify prior interacted items into categories. In general, item classifier 126 may be a machine learned model that receives a prior interacted item as an input and determines a category in response. Item classifier 126 may be trained to receive textual or image-based inputs, or both, and predict or generate a category from the inputs. Thus, by receiving a prior interacted item, item classifier 126 may receive all or a portion of a description of an item, including a textual description or an image corresponding to the prior interacted item. For instance, some items, such as documents, items listings of goods for sale, webpages, and so forth may include a title that can serve as an input to item classifier 126. Other textual portions of an item description can be provided as in input. Images identifying or representing the item may be provided to item classifier 126 to determine the category in which to classify the item.

In an aspect, item classifier 126 is a generative AI model. The generative AI model may contextualize the input and output a category into which the prior interacted item is classified. In doing so, the generative AI model may generate a category for the prior interacted item, identify a previously generated category for the prior interacted item, or may identify a category from a predetermined categorical taxonomy. This may be done based on the type of generative AI model and its training.

To provide one example, item classifier 126 can be trained to classify prior interacted items into categories of a categorical taxonomy. Training data may include a broad database of textual, visual, and general descriptive information. For instance, training data may include a wide range of sources, such as websites, books, Wikipedia, scientific articles, news outlets, technical manuals, movie scripts, programming code, educational materials, and other texts, which can generate a broad understanding of human language. Item classifier 126 can be trained on a dataset comprising such texts.

For example, for a model comprising a transformer architecture, with multiple layers and millions of parameters, the training objective is to minimize the difference between the predicted and actual next word in a given sequence of words of the training data, e.g., the general textual material. This may be achieved using a loss function, such as cross-entropy. The parameters of item classifier 126 may be optimized using, for example, gradient-based optimization algorithms, such as Adam. This results in a pretrained base model, which may be used as item classifier 126 in some cases.

In aspects, item classifier 126 can be trained, at least in part, using item corpus 132. Item corpus comprises items and item descriptions corresponding to the items. In aspects, this may include items for sale on an ecommerce platform and the item descriptions corresponding to the items.

In an aspect, item classifier 126 is fine-tuned on a specific document set, which may be based on the use case of item classifier 126. The fine-tuning may be done using algorithms similar to those described in training the initial base model. For instance, in a broad use case, such as general internet searching, item classifier 126 may be trained on a general training database as described. In cases where item classifier 126 is employed for a particular task or a particular context, a corpus of documents related to that task or concept may be used to train or fine-tune item classifier 126. As an example, for use by an ecommerce website, the item classifier 126 may be trained on items and item descriptions of items for sale on the ecommerce website, as included in item corpus 132. By doing so, item classifier 126 better contextualizes inputs provided in the context of searching for item listings on the ecommerce website.

In an aspect, the resulting trained item classifier 126 is a generative AI model, whereby the generative AI model generates new content in response to a prompt based on the training. In such aspects, item classifier 126 may be used to classify items by receiving as a prompt an instruction to classify an item and one or more items. Based on the item description of the items or based on the item description relative to other item descriptions, item classifier 126 outputs a classification for the one or more items. In the context of prior interacted items, the prior interacted items may be provided to item classifier 126 with a prompt to identify an item classification, and based on the prompt, item classifier 126 generates an item classification for the prior interacted items.

In aspects, a predetermined categorical taxonomy is used. In such cases, one example method for classifying items, such as prior interacted items, includes providing the categories of the categorical taxonomy to item classifier 126. This may include providing a description of the categories within the categorical taxonomy. Having received this information, item classifier 126 may be prompted to classify items, including prior interacted items, according to the provided taxonomy.

In aspects, item classifier 126 may determine classification from an image of an item, e.g., a prior interacted item. Various models may be used for object detection and classification such as CNNs (convolutional neural networks); regression models, such as YOLO (You Only Look Once); deep neural networks, such as SSDs (single shot detectors); or other like models.

As an example, such models may be trained on an image dataset. The images may include labeled images. These labels may correspond to the categories of the categorical taxonomy. In aspects, the image dataset may be a collection of images having objects that are manually labeled with categories to which the object is intended to belong. In some cases, the image may be generated using an image model that generates images from a prompt, e.g., diffusion models.

Various loss functions may be used during training. One example includes cross-entropy loss. This may be minimized during training through an optimization function, such as Adam, SGD (Stochastic Gradient Descent), RMSprop, or other like function. During training, item classifier 126 learns to identify an object, e.g., an item rendering, within an image and output a classification for the object according to the categorical taxonomy.

Aspects of the technology employ a multimodal model for use as item classifier 126. For instance, the multimodal model may use one or more models to classify items, e.g., prior interacted items, using text from an item description and an image of the items. The multimodal model may include any one or more of the models previously described, or another model architecture trained to classify items from textual descriptions and images.

It should be noted that the aforementioned training methods involving pre-training and fine-tuning are provided as illustrative examples and are not intended to limit the scope of potential training methodologies that could be employed. Other approaches may include reinforcement learning from human feedback (RLHF), transfer learning from related tasks, where the model is initially trained on a task that is similar but not identical to the target task, and then fine-tuned on the specific task of interest; multi-task learning, where the model is trained to perform multiple tasks simultaneously, sharing representations between them to improve overall performance; or other training methods. These training methods can be standalone approaches or can be integrated with other techniques to create a more robust and versatile model, along with new methods may be incorporated as they are developed.

Other classification models may be used as item classifier 126 in addition to or in lieu of a generative AI model and other previously discussed. In aspects, some discriminative models may be trained and used to classify items, such as prior interacted items. Some example models that may be used include SVMs (support vector machines); logistic regression models; decision-tree based models, such as random forests, GBM (gradient boosting machines), and the like; KNN (K-nearest neighbors); non-generative neural networks, such as those previously described or others, e.g., CNNs and computer visions techniques; or other like models may be employed. These are often trained on labeled datasets, and in aspects, may be trained or fine-tuned using item corpus 132.

Based on its training, item classifier 126 may be suitable for classifying items into categories of a categorical taxonomy. Thus, item classifier 126 may classify prior interacted items into a categorical taxonomy. As such, item classification engine 112 may employ item classifier 126 to classify prior interacted items into categories of a categorical taxonomy. This may be done by receiving all or a portion of a prior interacted item description as an input. Prior interacted item descriptions comprise one or more of a textual description of an item, item images, video of the item, audio describing the item, or other like modes of conveying item information. Responsive to the input, item classifier 126 outputs one or more categories, thus identifying or generating one or more categories into which item classification engine 112 classifies the items. In one example implementation, a title within the prior interacted item description is used by item classification engine 112 to classify a corresponding prior interacted item into a category.

In aspects, a video of an item may be reduced to individual frames, which may be provided to item classification engine 112 for classifying a prior interacted item into categories. In aspects, where a prior interacted item description includes audio of an item, the audio may be reduced to text using a speech-to-text model. There are various speech-to-text models suitable for use with the present technology that will be known to those of ordinary skill in the art.

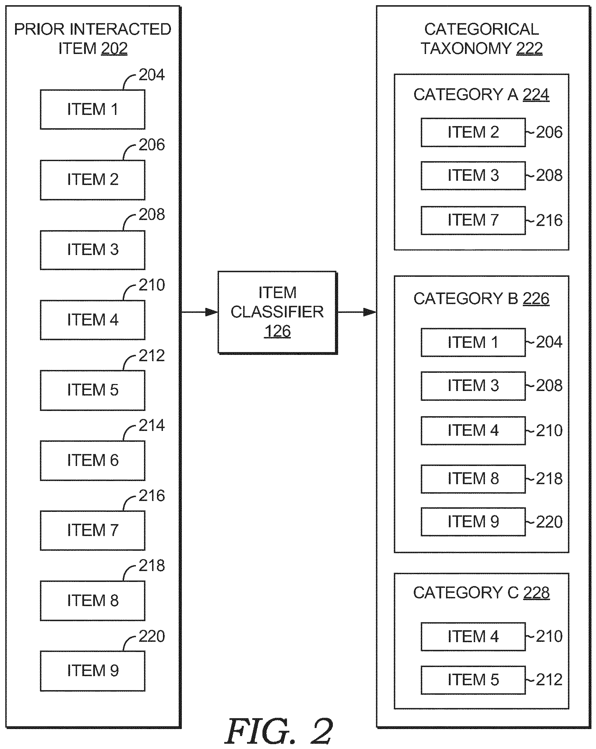

FIG. 2 provides an illustration of an example classification of prior interacted items 202 using item classifier 126. In this example, prior interacted items 202 comprises items 1-9, respectively labeled 204-220. All or a portion of respective prior interacted item descriptions are input to item classifier 126.

In response, item classifier 126 classifies the prior interacted items into categorical taxonomy 222. In this example, categorical taxonomy 222 comprises category A 224, category B 226, and category C 228. As noted, each item may be classified into one or more categories of categorical taxonomy 222 based on features of the items, where each item within a category of categorical taxonomy 222 shares a common feature. In a specific implementation of the technology, each category represents a style of clothing, and each item in the category shares a common style. As such, the term feature may include physical features or intangible features, such as style. In the example illustrated, item 2 206, item 3 208, and item 7 216 were classified into category A 224; item 1 204, item 3 208, item 4 210, item 8 218, and item 9 220 were each classified into category B 226; and item 4 210 and item 5 212 were classified into category C 228. As noted, each prior interacted item may be classified into one or more categories, as some items share features common to more than one category. In the example illustrated, item 3 208 was classified into both category A 224 and category B 226. Item 4 210 was classified into category B 226 and category C 228. The remaining items were classified into only one category.

Category ranker 114 generally ranks categories of the categorical taxonomy. Categories may be ranked based on the prior interacted items classified into each of the categories. For example, the categories may be ranked based on a number of prior interacted items classified into each category. For instance, categories having a greater number of prior interacted items can be ranked higher than categories having relatively fewer numbers of classified prior interacted items.

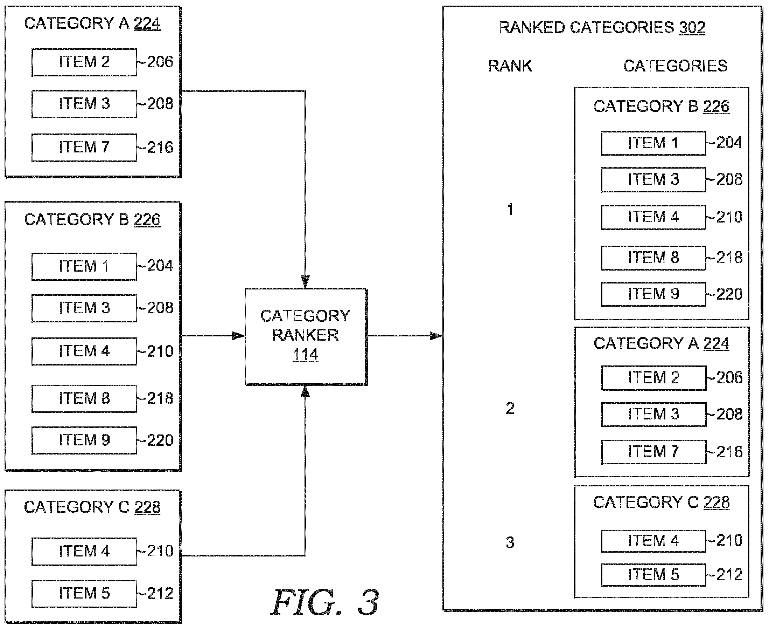

FIG. 3 provides an illustration of an example ranking using category ranker 114. Here, category ranker 114 is ranking the categories of categorical taxonomy 222 illustrated in FIG. 2 and comprising category A 224, category B 226, and category C 228. In the example illustrated, category ranker 114 ranks the categories according to a number of items (prior interacted items, in this case), with categories having a greater number of items ranked relatively higher. As illustrated, ranked categories 302 comprises category B 226 being a top-ranked category, as it has five items. Category A 224 is ranked second, as it has three items, which is less than the number of items in category B 226. Category C 228 is ranked third, as it has two items, which is less than the number of items in category B 226 and category A 224.

As noted, images used for searching may be generated according to the categorical taxonomy. That is, an image may be generated for searching items using prior interacted items from a particular class.

Item selector 116 generally selects prior interacted items from one or more categories. Item selector 116 may select prior interacted items from one or more of the ranked categories according to the ranking. For instance, one of the categories from which items are selected may be a top-ranked category. Items may be selected for any number of categories.

When selecting items from a category, item selector 116 may select any number of items. In an aspect, item selector 116 selects all of the items classified into a particular category, such as the top-ranked category. In another aspect, item selector 116 selects a subset of prior interacted items from a particular category. The selected items are included in a set of prior interacted items.

In an aspect, item selector 116 may select additional complementary items to include in the set of prior interacted items. That is, in some implementations, item selector 116 may identify a prior interacted item and select an item complementary to that prior interacted item. The complementary item may be an item selected from a same category as the prior interacted item. In some cases, the complementary item is selected because it includes a same or similar feature, as identified by a common tag, description, or visual feature of the items, for example. By doing this, item selector 116 may build a robust set of prior interacted items from which a photo-realistic image is generated. In doing so, this may aid in generating more variety in the item renderings of the photo-realistic image(s) for which to use for recommendations or searches.

Item selector 116 may generate one or more sets of prior interacted items from a single category. For instance, item selector 116 may generate a single set of prior interacted items that includes prior interacted items selected from the category. All or a select portion of the prior interacted items classified within the category may be selected and used to generate an image for searching items based on the category, as will be further described.

In another aspect, a plurality of sets of prior interacted items is selected. Thus, in an aspect, item selector 116 may generate a first set of prior interacted items and at least a second set of prior interacted items. Different prior interacted items from the category may be selected for each set of prior interacted items. As such, search engine 110 can be configured to generate, or otherwise access, and provide a plurality of different images that can be used for item searching.

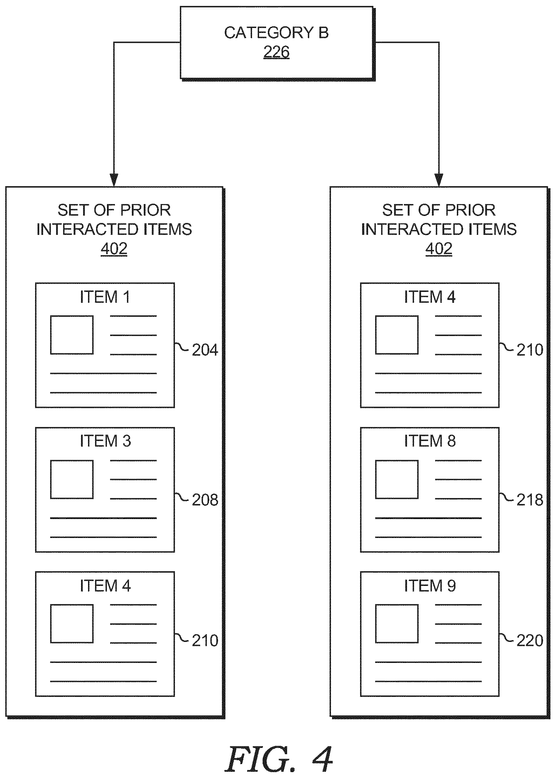

FIG. 4 illustrates an example of prior interacted items that may be selected using item selector 116. In the example illustrated, category B 226 is provided as the particular category from which items are selected for image generation. This may be done based on category B 226 being the top-ranked category. While two sets of prior interacted items are generated, it will be realized that any one or more may be generated using item selector 116. In the example illustrated, set of prior interacted items 402 is generated from a portion of the prior interacted items classified into category B 226. In this example, item selector 116 has selected item 1 204, item 3 208, and item 4 210 to include in set of prior interacted items 402. Item selector 116 has generated a second set of prior interacted items 404 that includes item 4 210, item 8 218, and item 9 220. As illustrated, a prior interacted item may be selected for inclusion in more than one set of prior interacted items. By generating multiple sets of prior interacted items having different prior interacted items, different images for the same category can be generated for searching items from a database, as will be described.

Although not illustrated in FIG. 4, item selector 116 may select sets of prior interacted items from additional categories as well based on the ranking. For instance, item selector 116 may select sets of prior interacted items from any number of categories according to the ranking based on a threshold ranking value. That is, the threshold ranking value may define the number of categories from which item selector 116 selects sets of prior interacted items. For instance, if the threshold ranking value is five, then item selector 116 may select one or more sets of prior interacted items from each of the top five ranked categories. Search engine 110 may be configured to provide images generated from prior interacted items for any number of categories.

Generally, photo-realistic image generator 118 may be used to generate a photo-realistic image from a set of prior interacted items using image model 128. The generated photo-realistic images may comprise one or more item renderings and may be used to determine a search query for an item search.

In general, a photo-realistic image is an output generated by image model 128 responsive to an input. The input may be based on the set of prior interacted items and can be subject to prompt modification for image model 128 to generate the photo-realistic image. The photo-realistic image may mimic the appearance and qualities of a photograph. Photo-realistic images can include synthetic images generated by image model 128 using generative techniques and simulate real-life scenes with objects. Objects in these images may represent generated synthetic items that may be similar to real-world items searchable via an index.

These synthetic items in the photo-realistic image are generally referred to as item renderings. The renderings are digital representations of items that could potentially be found through a search engine. They are constructed based on the input parameters provided to image model 128 and are integrated into the overall photo-realistic image. Item renderings can vary widely in complexity and detail, depending on the type of model used as image model 128 and the specific input prompts using the set of prior interacted items.

To generate photo-realistic images from inputs based on sets of prior interacted items, image model 128 can include a machine learning model. In an example, image model 128 is a generative AImodel that receives text, images, or both and outputs the photo-realistic image in response. In a specific example, image model 128 is a diffusion model. While general reference is made to a diffusion model, or more broadly, a generative AI model, it will be understood that other image-generation models could be employed or developed, and such models are intended to be within the scope of this disclosure. Some non-limiting examples may include generative adversarial networks (GANs), variational autoencoders (VAEs), transformer models, and the like. Image model 128 may be a single AI model or may be a combination of various models that work to generate images.

In the context of a diffusion model, the training process for generating images could include a two-stage mechanism that first corrupts an original image by iteratively adding noise and then reverses this process to generate new image samples based on an input. In general, there are a number of image datasets that can be used. Some examples include Flickr 30k, IMBD-Wiki, Berkeley Deep Drive, and so forth. The inputs are encoded into a latent space, providing a condition for the generative process. During the diffusion process, image model 128 learns to map this latent representation to a series of noisy image states, effectively learning the transition dynamics between the input and the corresponding image.

Image model 128 is trained to minimize the difference between the generated image and the actual image corresponding to the input. As an example, mean squared error, cross-entropy, or other like functions may be used as the loss function for training. The optimization is typically performed using gradient-based algorithms, e.g., stochastic gradient descent (SGD), Adam, etc. Once trained, image model 128 can take an input and iteratively refine a noisy image until it generates a new image that closely matches the input, thereby generating photo-realistic images in accordance with the input. Other training methods may be employed as developed or may be employed based on the specific model being used. Based on its training, image model 128 receives an input that may include text or images from the sets of prior interacted items. In response, it generates a photo-realistic image representative of the input sets of prior interacted items, potentially including item renderings.

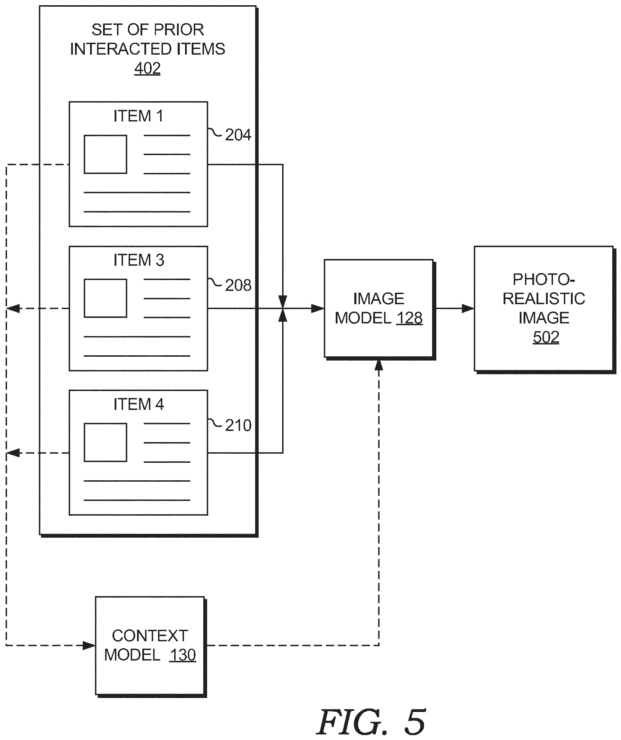

FIG. 5 illustrates an example in which photo-realistic image generator 118 employs image model 128 to generate photo-realistic image 502. Continuing with the examples illustrated in FIG. 1 through FIG. 4, set of prior interacted items 402 comprises item 1 204, item 3 208, and item 4 210, which are each used as an input to image model 128, as illustrated. In aspects, a title from each of item 1 204, item 3 208, and item 4 210 is provided to image model 128. In general, inputs to image model 128 may take all or a portion of a textual description from each of the prior interacted items in set of prior interacted items 402. The textual description may include text that describes features of the prior interacted items. As noted, inputs to image model 128 may include images, and thus, one or more images of the items within item 1 204, item 3 208, and item 4 210 may be included in the input. In multimodal aspects, both text and images are provided as inputs. In some aspects, image model 128 may receive a prompt as an input, such as "generate an image based on the following descriptions or images," and include the textual descriptions or images from the prior interacted items. Other prompts and prompt manipulation techniques may be employed depending on the model used as image model 128 and its training. Based on these inputs, image model 128 generates photo-realistic image 502, which as will be further discussed, may include item renderings that can form an item search for items on a database.

In an aspect, photo-realistic image generator 118 may be provided an input that causes image model 128 to generate a photo-realistic image having item renderings and a contextual background. A contextual background may be generated to provide context to the objects generated or context related to a user executing an item search. As an example, if the item renderings relate to ski equipment, then a contextual background may include a mountain or other snow-related scene. If the item renderings relate to swimwear, the contextual background might relate to a beach or pool. Contextual backgrounds may be related to the user as well. For instance, if the user lives in a coastal location, e.g., as determined by a user account or IP address, the contextual background may include a coastal scene. Contextual backgrounds may be based on a time of year. For instance, if the item search being performed using a generated photo-realistic image is close to the Christmas holidays, then the contextual background may be a Christmas holiday theme. These are just some examples in which contextual backgrounds may be generated, and it will be understood that others may also be suitable with the present technology.

To generate a contextual background for the photo-realistic image, search engine 110 may employ context determiner 120 to determine a context. Context information, such as that related to location, date, item information, etc., may be identified and passed to image model 128 when generating a photo-realistic image. In some implementations, context determiner 120 employs context model 130 to determine context information that can be used to generate a contextual background of a photo-realistic image.

To generate a contextual background, a prompt provided as an input to image model 128 may include information from prior interacted items, as previously described in addition to the context information. The prompt can be manipulated to indicate that the context information should be generated as background for the photo-realistic image. For instance, the prompt may comprise, "generate the image with a beach in the background," or any other prompt indicating the context information should be generated as a contextual background.

In the example illustrated by FIG. 5, contextual information is determined by context determiner 120 and passed to image model 128 for generating photo-realistic image 502. In this example, context determiner 120 employs context model 130 to determine the context information from prior interacted items of set of prior interacted items 402, including item 1 204, item 3 208, and item 4 210. The contextual information determined by context model 130 is passed to image model 128, which generates a contextual background corresponding to the contextual information.

In one example, context model 130 is a generative AI model trained to understand text or images. For instance, a large language model, trained on a general database of textual, visual, and general descriptive information learns a broad understanding of textual or visual information as it relates to human language and understanding, and based on which, context can be determined. Some example available models that may identify context from item information, including portions of a textual description or images from an item, include GPT-4, Mistral 7B, LLaMa 2, and so forth. As such, in some implementations, context determiner 120 may provide a prompt to a generative AI model to determine context of item information from prior interacted items.

While FIG. 5 illustrates a single photo-realistic image, photo-realistic image 502, any number of photo-realistic images may be generated. In an implementation, photo-realistic image generator 118 may generate one or more photo-realistic images for a single category. In such cases, the set of prior interacted items used to generate each photo-realistic image may be different, as was illustrated in FIG. 4. This provides different photo-realistic images with potentially different item renderings from which a user can select for an item search. As such, photo-realistic image generator 118 may generate a plurality of photo-realistic images that comprises a first photo-realistic image generated from a first set of prior interacted items and at least a second photo-realistic image generated from a second set of prior interacted items from the same category as the first set of prior interacted items, where the second set of prior interacted items has a combination of prior interacted items that is different from the first set of prior interacted items. Each of the generated images may be presented and an image or item rendering from an image may be selected for use with the item search.

Moreover, in an aspect, photo-realistic image generator 118 generates one or more images from each of a plurality of sets of prior interacted items, e.g., from the top three or five ranked categories. This provides different photo-realistic images corresponding to different categories that include different item renderings from which a user can select to initiate an item search. Here, photo-realistic image generator 118 may generate a plurality of photo-realistic images that comprises a first photo-realistic image generated from a first set of prior interacted items and at least a second photo-realistic image generated from a second set of prior interacted items from a different category as the first set of prior interacted items. Each of the generated images may be presented and an image or item rendering from an image may be selected for use with the item search.

As will be described, photo-realistic images generated by photo-realistic image generator 118 may be used to determine a search query for executing an item search. A search query may comprise the photo-realistic image or portion of the photo-realistic image, such as an isolated item rendering, or a textual description thereof.

To identify and isolate item renderings from a photo-realistic image, search engine 110 may employ segmentation engine 122. In general, segmentation engine 122 identifies and isolates item renderings. An isolated item rendering may be used as the basis for a search query for an item search.

In some aspects, segmentation engine 122 may be employed to identify an item rendering in a photo-realistic image and isolate it from the rest of the photo-realistic image. Segmentation engine 122 may apply a segmentation mask over an area of the photo-realistic image corresponding to the item rendering.

As an example, for image segmentation, a CNN may be used. A labeled image dataset may be used to train the CNN, such as ImageNet, COCO (common objects in context), PASCAL VOC (visual object classes), and the like. These datasets comprise labeled images with rich sets of annotations that include thousands of object categories. More specific datasets may be used for item rendering identification, in addition to or in lieu of those previously described. One more specific dataset includes millions of items for sale or having been offered for sale at eBay. These items and items titles or other labels can be used to train or fine-tune the model to accurately identify item renderings within photo-realistic images that correspond to similar items offered for sale on the ecommerce platform.

Various methods exist for training CNNs for image segmentation, with fully convolutional networks (FCNs) and U-Nets being examples. FCNs are designed to handle various size inputs, making them suitable for use with the present technology. U-Nets can extend the capabilities of FCNs by incorporating skip connections, which help retain details of the photo-realistic image from the input throughout the network's architecture. In an example training method, a CNN is trained using labeled image datasets where each pixel in the image is assigned to a specific category or class. During training, the CNN network learns to recognize patterns and features through backpropagation, aiming to minimize the difference between its predicted segmentation and the ground truth labels.

Image classification may be done by the same or different network in order to identify an item rendering in the image. CNNs may also be suitable for the classification task. During training, each pixel may be labeled with a particular classification in the training image dataset. These classifications may relate to many different objects in an image. For instance, the pixel classification may relate to various items. To minimize these differences during training, mean squared error, cross-entropy loss, or another like algorithm may be used. This is just one example, and other models and other training methods may be employed for image segmentation.

Models other than CNNs may be used to identify and isolate item renderings from photo-realistic images, such as RNNs (recurrent neural networks), autoencoders, GANs, transformers, and so on. Various training methods may be used, such as supervised training methods using the training datasets previously provided. The discussion herein is intended to provide some examples for use in the technology. These networks may be used alone or in combination with other networks, and other models suitable for use may be developed.

Segmentation engine 122 can employ the trained image recognition model to segment a photo-realistic image with respect to the item renderings. For instance, segmentation engine 122 identifies pixels within an input photo-realistic image and assigns each pixel a classification, including classifications corresponding to items learned from the training. In doing so, segmentation engine 122 identifies the edges of item renderings within the photo-realistic image, as the edges may correspond to item rendering pixels that are adjacent to pixels assigned to another classification or another item rendering. Segmentation engine 122 may isolate the item rendering by removing or rendering transparent pixels in the photo-realistic image that are not assigned to the particular item rendering being isolated. The remaining pixels of the photo-realistic image assigned to the item rendering provide the isolated item rendering.

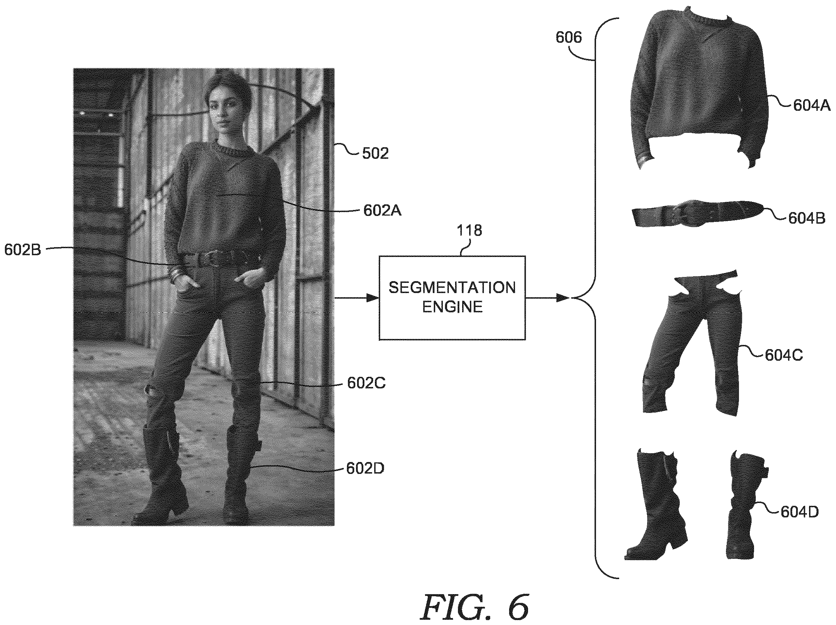

FIG. 6 illustrates an example of how photo-realistic image 502 may be segmented by segmentation engine 122 to identify and isolate item renderings 602A-602D. One or more of these may be identified and isolated by segmentation engine 122, as illustrated by isolated item renderings 604A-604D. Any one or more of the item renderings may be used for an item search.

In aspects, a segmented photo-realistic image may be presented to a user. A selection at the segmented photo-realistic image may be received. The selection may correspond to an area of the segmented photo-realistic image identified as an item rendering, thus indicating that the particular item rendering selected is to be used as the basis of a search query for an item search. This is one example method in which a portion of the photo-realistic image corresponding to a particular item rendering can be identified and used for the item search.

To perform an item search, search engine 110 may employ searcher 124. Searcher 124 may employ text-based or image-based search techniques to identify items using a search query and return search results. In general, searcher 124 executes an item search using a search query that is determined from the photo-realistic image. The search query may be all or a portion, such as an item rendering, of a photo-realistic image.

In general, a search query used to execute an item search can be determined from the photo-realistic image, meaning that the search query may be determined from all or a portion of the photo-realistic image, such as one or more item renderings. The search query may comprise the photo-realistic image, or a portion thereof, such as one or more isolated item renderings. In aspects, the search query is a text-based query, where the text of the text-based query is determined from the photo-realistic image, or a portion thereof, such as one or more isolated item renderings. Various models may be used to generate text from an image, such as CNN-RNN architectures that can utilize the CNN to extract image features and the RNN to generate descriptive text from the extracted features, generative based AI models trained on a combination of images and textual descriptions, or another model type and training. One example model that may be suitable for use is the NIC (neural image caption) generator.

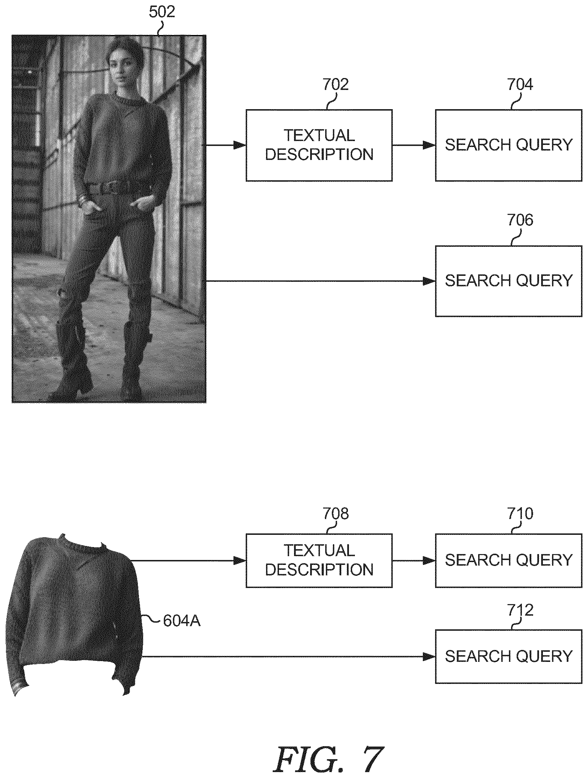

FIG. 7 illustrates an example illustrating search queries determined from photo-realistic image 502. As illustrated, search query 704 is a text-based search query. Here, search query 704 is a textual description 702 generated from photo-realistic image 502. Photo-realistic image 502 may be used as an input to an image-to-text generation model that outputs textual description 702 for use as search query 704, as described. In an aspect, search query 706 is generated as an image-based search query, wherein photo-realistic image 502 is used as the image.

Search query 710 is generated from a portion of photo-realistic image 502, which in this case is isolated item rendering 604A, as illustrated also in FIG. 6. While illustrated as using one isolated item rendering 604A, any one or more isolated item renderings may be used to determine a search query. In an aspect, an isolated item rendering, such as isolated item rendering 604A, is selected by a user for use in generating a search query. Continuing with FIG. 7, search query 710 is a text-based search query. Here, search query 710 is a textual description 708 generated from isolated item rendering 604A. Isolated item rendering 604A may be used as an input to an image-to-text generation model that outputs textual description 708 for use as search query 710, as described. In an aspect, search query 712 is generated as an image-based search query, wherein isolated item rendering 604A is used as the image.

Searcher 124 uses a search query, such as any of search queries 704, 706, 710, or 712 to execute an item search and return search results. The executed search may return one or more items. In an aspect, searcher 124 executes an item search using either a text-based search query or an image-based search query. In an aspect, searcher 124 executes an item search by combining a text-based search query search with an image-based search query search. This can be done for search queries derived from the same photo-realistic image or a portion thereof. Briefly, using FIG. 7 as an example, searcher 124 could execute an item search for photo-realistic image 502 using both search query 704 and search query 706. Likewise, searcher 124 could execute an item search for isolated item rendering 604A using both search query 710 and search query 712. The one or more items identified during the search may be offered as a search result, e.g., a recommendation or search result page.

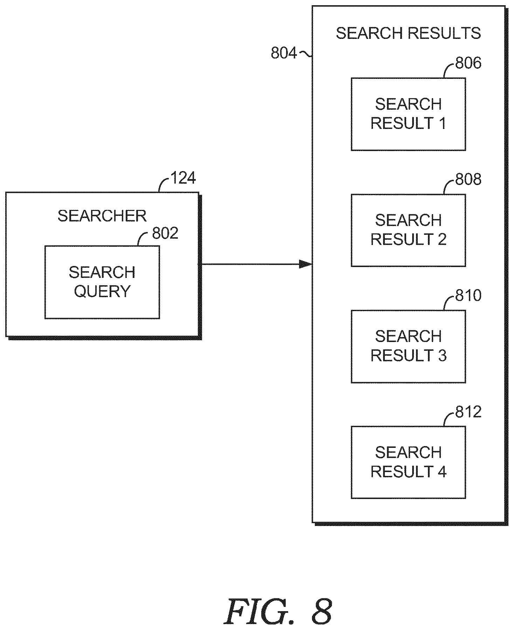

Turning now to FIG. 8, an example implementation of searcher 124 to execute an item search is provided. As illustrated, searcher 124 executes the item search using search query 802, which may be a text-based search query, image-based search query, or a combination thereof determined from a photo-realistic image or portion thereof. The item search returns search results 804, illustrated as comprising search result 1 806, search result 2 808, search result 3 810, and search result 4 812. These are items identified during the search that may be similar to the photo-realistic image or isolated item rendering.

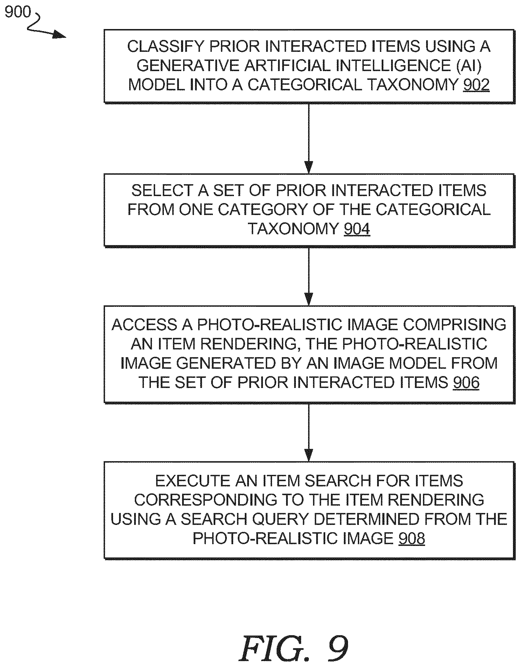

With reference now to FIG. 9, a block diagram of an example method for executing an item search is provided. Each block of the method may comprise a computing process performed using any combination of hardware, firmware, or software. For instance, various functions can be carried out by a processor executing instructions stored in memory. The method can also be embodied as computer-usable instructions stored on computer storage media. The method can be provided by a standalone application, a service or hosted service (standalone or in combination with another hosted service), or a plug-in to another product, to name a few possibilities. The method may be implemented in whole or in part by components of operating environment 100.

In block 902, method 900 classifies prior interacted items. This may be done using item classification engine 112. In an aspect, item classification engine 112 employs item classifier 126 to perform the classification of prior interacted items. In an aspect, a generative AI model is used to perform the classification. Another type of model, such as any of those described with respect to classification engine 112, may be used for the classification. The generative AI model may classify the prior interacted items according to a predetermined categorical taxonomy or may generate the classifications based on the input prior interacted items and categorize the prior interacted items according to the generated categorical taxonomy. When classifying the prior interacted item, item classification engine 112 may receive a title of a prior interacted item, a textual description of the prior item included with the prior interacted item, an image of the prior interacted item, or any combination thereof.

In block 904, method 900 selects a set of prior interacted items from one category of the categorical taxonomy. This may be done by item selector 116. Item selector 116 may select items from other categories to form other sets of prior interacted items. In an aspect, the categories of the categorical taxonomy are ranked according to a number of prior interacted items classified into each category. In an aspect, item selector 116 selects the set of prior interacted items from a top-ranked category. Item selector 116 may select a plurality of sets of prior interacted items from an item category, such as the top-ranked category, by including different prior interacted items with each set of prior interacted items selected from that category.

In block 906, method 900 accesses a photo-realistic image comprising an item rendering. The accessed photo-realistic image may be generated from the set of prior interacted items. This may be done using an image model, such as image model 128. In an aspect, accessing the photo-realistic image comprises providing a prompt generated from the sets of prior interacted items to an image model and receiving the photo-realistic image in response. In aspects, accessing the photo-realistic image comprises generating, using photo-realistic image generator 118, the photo-realistic image.

In an aspect, multiple photo-realistic images may be generated from either the same category or different categories. In some cases, the generated photo-realistic images are presented to a user. A photo-realistic image from those presented, or an item rendering from the photo-realistic images presented, may be selected and used in executing the item search, as will be described.

In some cases, a photo-realistic image may be generated to have a contextual background. This may be done by determining a context from the prior interacted items of the set of prior interacted items, from a user or computer location, or from some other user data from a user account. The context information may be passed to the photo-realistic image generator 118 with instructions to use the context information as a background when generating the photo-realistic image.

In block 908, method 900 executes an item search for an item. The executed item search may include a search for items that correspond to the item rendering by using a search query determined from the photo-realistic image. The executed search may return one or more items as search results, e.g., item recommendations.

In an aspect, an item rendering is used to determine the search query. The item rendering may be an isolated item rendering. For instance, a photo-realistic image may be provided to segmentation engine 122 to identify and isolate item renderings. One or more may be selected and used to determine the search query for the executed item search.

Having described an overview of some embodiments of the present technology, an example computing environment in which embodiments of the present technology may be implemented is described below in order to provide a general context for various aspects of the present technology. Referring now to FIG. 10 in particular, an example operating environment for implementing embodiments of the present technology is shown and designated generally as computing device 1000. Computing device 1000 is but one example of a suitable computing environment and is not intended to suggest any limitation as to the scope of use or functionality of the technology. Computing device 1000 should not be interpreted as having any dependency or requirement relating to any one or combination of components illustrated.

The technology may be described in the general context of computer code or machine-useable instructions, including computer-executable instructions, such as program modules, being executed by a computer or other machine, such as a cellular telephone, personal data assistant or other handheld device. Generally, program modules, including routines, programs, objects, components, data structures, etc., refer to code that performs particular tasks or implements particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 10, computing device 1000 includes bus 1010, which directly or indirectly couples the following devices: memory 1012, one or more processors 1014, one or more presentation components 1016, input/output (I/O) ports 1018, input/output components 1020, and illustrative power supply 1022. Bus 1010 represents what may be one or more buses (such as an address bus, data bus, or combination thereof). Although the various blocks of FIG. 10 are shown with lines for the sake of clarity, in reality, delineating various components is not so clear, and metaphorically, the lines would more accurately be grey and fuzzy. For example, one may consider a presentation component, such as a display device, to be an I/O component. Also, processors have memory. The inventors recognize that such is the nature of the art, and reiterate that the diagram of FIG. 10 is merely illustrative of an example computing device that can be used in connection with one or more embodiments of the present technology. Distinction is not made between such categories as "workstation," "server," "laptop," "handheld device," etc., as all are contemplated within the scope of FIG. 10 and with reference to "computing device."

Computing device 1000 typically includes a variety of computer-readable media. Computer-readable media can be any available media that can be accessed by computing device 1000 and includes both volatile and non-volatile media, and removable and non-removable media. By way of example, and not limitation, computer-readable media may comprise computer storage media and communication media. Computer storage media, also referred to as a communication component, includes both volatile and non-volatile, removable and non-removable media implemented in any method or technology for storage of information, such as computer-readable instructions, data structures, program modules, or other data. Computer storage media includes, but is not limited to, RAM, ROM, EEPROM, flash memory, or other memory technology; CD-ROM, digital versatile disks (DVDs), or other optical disk storage; magnetic cassettes, magnetic tape, magnetic disk storage, or other magnetic storage devices; or any other medium that can be used to store the desired information and that can be accessed by computing device 1000. Computer storage media does not comprise signals per se.

Communication media typically embodies computer-readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media, such as acoustic, radio frequency (RF), infrared, and other wireless media. Combinations of any of the above should also be included within the scope of computer-readable media.

Memory 1012 includes computer-storage media in the form of volatile or non-volatile memory. The memory may be removable, non-removable, or a combination thereof. Example hardware devices include solid-state memory, hard drives, optical-disc drives, etc. Computing device 1000 includes one or more processors that read data from various entities, such as memory 1012 or I/O components 1020. Presentation component(s) 1016 presents data indications to a user or other device. Example presentation components include a display device, speaker, printing component, vibrating component, etc.

I/O ports 1018 allow computing device 1000 to be logically coupled to other devices, including I/O components 1020, some of which may be built in. Illustrative components include a microphone, joystick, game pad, satellite dish, scanner, printer, wireless device, etc. The I/O components 1020 may provide a natural user interface (NUI) that processes air gestures, voice, or other physiological inputs generated by a user. In some instances, inputs may be transmitted to an appropriate network element for further processing. An NUI may implement any combination of speech recognition, stylus recognition, facial recognition, biometric recognition, gesture recognition, both on screen and adjacent to the screen, as well as air gestures, head and eye tracking, or touch recognition associated with a display of computing device 1000. Computing device 1000 may be equipped with depth cameras, such as stereoscopic camera systems, infrared camera systems, RGB (red-green-blue) camera systems, touchscreen technology, other like systems, or combinations of these, for gesture detection and recognition. Additionally, the computing device 1000 may be equipped with accelerometers or gyroscopes that enable detection of motion. The output of the accelerometers or gyroscopes may be provided to the display of computing device 1000 to render immersive augmented reality or virtual reality.

At a low level, hardware processors execute instructions selected from a machine language (also referred to as machine code or native) instruction set for a given processor. The processor recognizes the native instructions and performs corresponding low-level functions relating, for example, to logic, control, and memory operations. Low-level software written in machine code can provide more complex functionality to higher levels of software. As used herein, computer-executable instructions includes any software, including low-level software written in machine code; higher-level software, such as application software; and any combination thereof. In this regard, components for item searching using an image generated using a categorical taxonomy can manage resources and provide the described functionality. Any other variations and combinations thereof are contemplated within embodiments of the present technology.

With reference briefly back to FIG. 1, it is noted and again emphasized that any additional or fewer components, in any arrangement, may be employed to achieve the desired functionality within the scope of the present disclosure. Although the various components of FIG. 1 are shown with lines for the sake of clarity, in reality, delineating various components is not so clear, and metaphorically, the lines may more accurately be grey or fuzzy. Although some components of FIG. 1 are depicted as single components, the depictions are intended as examples in nature and in number and are not to be construed as limiting for all implementations of the present disclosure. The functionality of operating environment 100 can be further described based on the functionality and features of its components. Other arrangements and elements (e.g., machines, interfaces, functions, orders, and groupings of functions, etc.) can be used in addition to or instead of those shown, and some elements may be omitted altogether.

Further, some of the elements described in relation to FIG. 1, such as those described in relation to search engine 110, are functional entities that may be implemented as discrete or distributed components or in conjunction with other components, and in any suitable combination and location. Various functions described herein are being performed by one or more entities and may be carried out by hardware, firmware, or software. For instance, various functions may be carried out by a processor executing computer-executable instructions stored in memory, such as database 106. Moreover, functions of search engine 110, among other functions, may be performed by server 102, computing device 104, or any other component, in any combination. For example, in a particular aspect, search engine 110 may identify and select a set of prior interacted items that are provided to another server for generating an image, which is then received back from the server. This is just one example, and other example combinations and configurations within the context of this disclosure will be understood by those of ordinary skill in the art.

Referring to the drawings and description in general, having identified various components in the present disclosure, it should be understood that any number of components and arrangements might be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, or software. For instance, various functions may be carried out by a processor executing instructions stored in memory. As such, other arrangements and elements (e.g., machines, interfaces, functions, orders, and groupings of functions, etc.) can be used in addition to or instead of those shown.

Embodiments described above may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of the present technology is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" or "block" might be used herein to connote different elements of methods employed, the terms should not be interpreted as implying any particular order among or between various steps herein disclosed unless and except when the order of individual steps is explicitly stated.

For purposes of this disclosure, the word "including," "having," and other like words and their derivatives have the same broad meaning as the word "comprising," and the word "accessing" comprises "receiving," "referencing," or "retrieving," or derivatives thereof. Further, the word "communicating" has the same broad meaning as the word "receiving" or "transmitting," as facilitated by software or hardware-based buses, receivers, or transmitters using communication media described herein.

In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (*a* or *b* thus includes either *a* or *b,* as well as *a* and *b).*

For purposes of a detailed discussion above, embodiments of the present technology are described with reference to a distributed computing environment. However, the distributed computing environment depicted herein is merely an example. Components can be configured for performing novel aspects of embodiments, where the term "configured for" or "configured to" can refer to "programmed to" perform particular tasks or implement particular abstract data types using code. Further, while embodiments of the present technology may generally refer to the distributed data object management system and the schematics described herein, it is understood that the techniques described may be extended to other implementation contexts.

From the foregoing, it will be seen that this technology is one well adapted to attain all the ends and objects described above, including other advantages that are obvious or inherent to the structure. It will be understood that certain features and subcombinations are of utility and may be employed without reference to other features and subcombinations. This is contemplated by and is within the scope of the claims. Since many possible embodiments of the described technology may be made without departing from the scope, it is to be understood that all matter described herein or illustrated by the accompanying drawings is to be interpreted as illustrative and not in a limiting sense.

Some example aspects that may be practiced from the foregoing description include, but are not limited to the following examples:
Aspect 1: A method (system or media) performed by one or more processors, the method comprising: classifying prior interacted items using a generative artificial intelligence (AI) model into a categorical taxonomy; selecting a set of prior interacted items from one category of the categorical taxonomy; generating, using an image model, a photo-realistic image comprising an item rendering, the photo-realistic image generated from the set of prior interacted items; and executing an item search for an item corresponding to the item rendering using a search query determined from the photo-realistic image.
Aspect 2: A system (method or media) comprising: at least one processor; and one or more computer storage media storing computer readable instructions thereon that when executed by the at least one processor cause the at least one processor to perform operations comprising: ranking categories of a categorical taxonomy by a number of prior interacted items classified to each category; selecting a set of prior interacted items from a top-ranked category; generating, using an image model, a photo-realistic image comprising an item rendering, the photo-realistic image generated from the set of prior interacted items; and executing an item search for an item corresponding to the item rendering using a search query determined from the photo-realistic image.
Aspect 3: One or more computer storage media (method or system) storing computer-readable instructions thereon that, when executed by a processor, cause the processor to perform a method comprising: classifying prior interacted items using a generative artificial intelligence (AI) model into a categorical taxonomy; selecting a set of prior interacted items from one category of the categorical taxonomy; accessing a photo-realistic image comprising an item rendering, the photo-realistic image generated by an image model from the set of prior interacted items; and executing an item search for an item corresponding to the item rendering using a search query determined from the photo-realistic image.
Aspect 4: Any of Aspects 1 or 3, further comprising ranking categories of the categorical taxonomy by a number of prior interacted items classified into each category, wherein the one category of the categorical taxonomy from which the set of prior interacted items is selected corresponds to a top-ranked category.
Aspect 5, Aspect 2, further comprise classifying prior interacted items using a generative artificial intelligence (AI) model into the categories of the categorical taxonomy.
Aspect 6: Any of Aspects 1-5, further comprising generating a plurality of photo-realistic images using the image model, the plurality of photo-realistic images comprising the photo-realistic image and a second photo-realistic image generated from a second set of prior interacted items from the one category, the second set of prior interacted items comprising a combination of prior interacted items different from the set of prior interacted items, wherein the search query is determined based on a selection received for the photo-realistic image.
Aspect 7: Any of Aspects 1-6, further comprising: identifying the item rendering from among a plurality of item renderings in the photo-realistic image; and isolating the item rendering from the plurality of item renderings, wherein the search query is determined and the item search executed based on the isolated item rendering.
Aspect 8: Any of Aspects 1-7, further comprising determining a context of the set of prior interacted items, wherein a contextual background of the photo-realistic image is generated to correspond to the context.
Aspect 9: Any of Aspects 1-8, wherein a title of a prior interacted item description is provided to the generative AI model for classifying a corresponding prior interacted item into a category of the categorical taxonomy.
Aspect 10: Any of Aspects 1-9, wherein the generative AI model is a multimodal model, and the prior interacted items are each classified using at least a portion of a textual description of a prior interacted item description and an item image of the prior interacted item description.

Further exemplary aspects and embodiments of the present disclosure will be described by means of the following clauses:
1. A method performed by one or more processors, the method comprising:
   classifying prior interacted items into a categorical taxonomy using a generative artificial intelligence (AI) model;
   selecting a set of prior interacted items from one category of the categorical taxonomy;
   generating, using an image model, a photo-realistic image comprising an item rendering, the photo-realistic image generated from the set of prior interacted items; and
   executing an item search for an item corresponding to the item rendering using a search query determined from the photo-realistic image.
2. The method of clause 1, wherein a title of a prior interacted item description is provided to the generative AI model for classifying a corresponding prior interacted item into a category of the categorical taxonomy.
3. The method of clause 1, wherein the generative AI model is a multimodal model, and the prior interacted items are each classified using at least a portion of a textual description of a prior interacted item description and an item image of the prior interacted item description.
4. The method of clause 1, further comprising ranking categories of the categorical taxonomy by a number of prior interacted items classified into each category, wherein the one category of the categorical taxonomy from which the set of prior interacted items is selected corresponds to a top-ranked category.
5. The method of clause 4, further comprising generating a plurality of photo-realistic images using the image model, the plurality of photo-realistic images comprising the photo-realistic image and a second photo-realistic image generated from a second set of prior interacted items from the one category, the second set of prior interacted items comprising a combination of prior interacted items different from the set of prior interacted items, wherein the search query is determined based on a selection received for the photo-realistic image.
6. The method of clause 1, further comprising:
   identifying the item rendering from among a plurality of item renderings in the photo-realistic image; and
   isolating the item rendering from the plurality of item renderings, wherein the search query is determined and the item search executed based on the isolated item rendering.
7. The method of clause 1, further comprising determining a context of the set of prior interacted items, wherein a contextual background of the photo-realistic image is generated to correspond to the context.
8. A system comprising:
   at least one processor; and
   one or more computer storage media storing computer readable instructions thereon that when executed by the at least one processor cause the at least one processor to perform operations comprising:
      ranking categories of a categorical taxonomy by a number of prior interacted items classified to each category;
      selecting a set of prior interacted items from a top-ranked category;
      generating, using an image model, a photo-realistic image comprising an item rendering, the photo-realistic image generated from the set of prior interacted items; and
      executing an item search for an item corresponding to the item rendering using a search query determined from the photo-realistic image.
9. The system of clause 8, wherein the operations further comprise classifying prior interacted items into the categories of the categorical taxonomy using a generative artificial intelligence (AI) model.
10. The system of clause 8, wherein classification to each category is based on titles of a prior interacted item descriptions of corresponding prior interacted items.
11. The system of clause 8, wherein classification to each category is based on at least a portion of a textual description of prior interacted item descriptions and item images of the prior interacted item descriptions.
12. The system of clause 8, wherein the operations further comprise generating a plurality of photo-realistic images using the image model, the plurality of photo-realistic images comprising the photo-realistic image and a second photo-realistic image generated from a second set of prior interacted items from the top-ranked category, the second set of prior interacted items comprising a combination of prior interacted items different from the set of prior interacted items, wherein the search query is determined based on a selection received for the photo-realistic image.
13. The system of clause 8, wherein the operations further comprise:
   identifying the item rendering from among a plurality of item renderings in the photo-realistic image; and
   isolating the item rendering from the plurality of item renderings, wherein the search query is determined and the item search executed based on the isolated item rendering.
14. The system of clause 8, wherein the operations further comprise determining a context of the set of prior interacted items, wherein a contextual background of the photo-realistic image is generated to correspond to the context.
15. One or more computer storage media storing computer-readable instructions thereon that, when executed by a processor, cause the processor to perform a method comprising:
   classifying prior interacted items into a categorical taxonomy;
   selecting a set of prior interacted items from one category of the categorical taxonomy;
   accessing a photo-realistic image comprising an item rendering, the photo-realistic image generated by an image model from the set of prior interacted items; and
   executing an item search for an item corresponding to the item rendering using a search query determined from the photo-realistic image.
16. The media of clause 15, wherein a title of a prior interacted item description is provided to a generative AI (artificial intelligence) model for classifying a corresponding prior interacted item into a category of the categorical taxonomy.
17. The media of clause 15, wherein the prior interacted items are classified using a generative AI model, and the generative AI (artificial intelligence) model is a multimodal model, and the prior interacted items are each classified using at least a portion of a textual description of a prior interacted item description and an item image of the prior interacted item description.
18. The media of clause 15, wherein the method further comprises ranking categories of the categorical taxonomy by a number of prior interacted items classified into each category, wherein the one category of the categorical taxonomy from which the set of prior interacted items is selected corresponds to a top-ranked category.
19. The media of clause 15, wherein the method further comprises accessing a plurality of photo-realistic images generated by the image model, the plurality of photo-realistic images comprising the photo-realistic image and a second photo-realistic image generated from a second set of prior interacted items from the one category, the second set of prior interacted items comprising a combination of prior interacted items different from the set of prior interacted items, wherein the search query is determined based on a selection received for the photo-realistic image.
20. The media of clause 15, wherein the method further comprises:
   identifying the item rendering from among a plurality of item renderings in the photo-realistic image; and
   isolating the item rendering from the plurality of item renderings, wherein the search query is determined and the item search executed based on the isolated item rendering.

## Claims

1. A method performed by one or more processors, the method comprising:
classifying prior interacted items into a categorical taxonomy using a generative artificial intelligence (AI) model;
selecting a set of prior interacted items from one category of the categorical taxonomy;
generating, using an image model, a photo-realistic image comprising an item rendering, the photo-realistic image generated from the set of prior interacted items; and
executing an item search for an item corresponding to the item rendering using a search query determined from the photo-realistic image.

2. The method of claim 1, wherein a title of a prior interacted item description is provided to the generative AI model for classifying a corresponding prior interacted item into a category of the categorical taxonomy.

3. The method of claim 1 of 2, wherein the generative AI model is a multimodal model, and the prior interacted items are each classified using at least a portion of a textual description of a prior interacted item description and an item image of the prior interacted item description.

4. The method of any one of the preceding claims, further comprising ranking categories of the categorical taxonomy by a number of prior interacted items classified into each category, wherein the one category of the categorical taxonomy from which the set of prior interacted items is selected corresponds to a top-ranked category,
wherein, optionally, the method further comprises:
generating a plurality of photo-realistic images using the image model, the plurality of photo-realistic images comprising the photo-realistic image and a second photo-realistic image generated from a second set of prior interacted items from the one category, the second set of prior interacted items comprising a combination of prior interacted items different from the set of prior interacted items, wherein the search query is determined based on a selection received for the photo-realistic image.

5. The method of any one of the preceding claims, further comprising:
identifying the item rendering from among a plurality of item renderings in the photo-realistic image; and
isolating the item rendering from the plurality of item renderings, wherein the search query is determined and the item search executed based on the isolated item rendering; and/or
wherein the method further comprises:
determining a context of the set of prior interacted items, wherein a contextual background of the photo-realistic image is generated to correspond to the context.

6. A system comprising:
at least one processor; and
one or more computer storage media storing computer readable instructions thereon that when executed by the at least one processor cause the at least one processor to perform operations comprising:
ranking categories of a categorical taxonomy by a number of prior interacted items classified to each category;
selecting a set of prior interacted items from a top-ranked category;
generating, using an image model, a photo-realistic image comprising an item rendering, the photo-realistic image generated from the set of prior interacted items; and
executing an item search for an item corresponding to the item rendering using a search query determined from the photo-realistic image.

7. The system of claim 6, wherein the operations further comprise classifying prior interacted items into the categories of the categorical taxonomy using a generative artificial intelligence (AI) model.

8. The system of claim 6 or 7, wherein classification to each category is based on titles of a prior interacted item descriptions of corresponding prior interacted items; and/or
wherein classification to each category is based on at least a portion of a textual description of prior interacted item descriptions and item images of the prior interacted item descriptions.

9. The system of any one of claims 6 to 8, wherein the operations further comprise generating a plurality of photo-realistic images using the image model, the plurality of photo-realistic images comprising the photo-realistic image and a second photo-realistic image generated from a second set of prior interacted items from the top-ranked category, the second set of prior interacted items comprising a combination of prior interacted items different from the set of prior interacted items, wherein the search query is determined based on a selection received for the photo-realistic image.

10. The system of any one of claims 6 to 9, wherein the operations further comprise:
identifying the item rendering from among a plurality of item renderings in the photo-realistic image; and
isolating the item rendering from the plurality of item renderings, wherein the search query is determined and the item search executed based on the isolated item rendering.

11. The system of any one of claims 6 to 10, wherein the operations further comprise determining a context of the set of prior interacted items, wherein a contextual background of the photo-realistic image is generated to correspond to the context.

12. One or more computer storage media storing computer-readable instructions thereon that, when executed by a processor, cause the processor to perform a method comprising:
classifying prior interacted items into a categorical taxonomy;
selecting a set of prior interacted items from one category of the categorical taxonomy;
accessing a photo-realistic image comprising an item rendering, the photo-realistic image generated by an image model from the set of prior interacted items; and
executing an item search for an item corresponding to the item rendering using a search query determined from the photo-realistic image.

13. The media of claim 12, wherein a title of a prior interacted item description is provided to a generative AI (artificial intelligence) model for classifying a corresponding prior interacted item into a category of the categorical taxonomy.

14. The media of claim 12 or 13, wherein the prior interacted items are classified using a generative AI model, and the generative AI (artificial intelligence) model is a multimodal model, and the prior interacted items are each classified using at least a portion of a textual description of a prior interacted item description and an item image of the prior interacted item description.

15. The media of any one of claims 12 to 14, wherein the method further comprises ranking categories of the categorical taxonomy by a number of prior interacted items classified into each category, wherein the one category of the categorical taxonomy from which the set of prior interacted items is selected corresponds to a top-ranked category; and/or
wherein the method further comprises accessing a plurality of photo-realistic images generated by the image model, the plurality of photo-realistic images comprising the photo-realistic image and a second photo-realistic image generated from a second set of prior interacted items from the one category, the second set of prior interacted items comprising a combination of prior interacted items different from the set of prior interacted items, wherein the search query is determined based on a selection received for the photo-realistic image; and/or
wherein the method further comprises:
identifying the item rendering from among a plurality of item renderings in the photo-realistic image; and
isolating the item rendering from the plurality of item renderings, wherein the search query is determined and the item search executed based on the isolated item rendering.
